# EUROPÄISCHE PATENTSCHRIFT

(11) **EP 0 675 629 B1**
(45) Veröffentlichungstag und Bekanntmachung des Hinweises auf die Patenterteilung: **24.11.2004**
(21) Anmeldenummer: 95102911.5
(22) Anmeldetag: 01.03.1995
(51) Int. Cl.: H04M 19/02

(54) **Verfahren zur störsicheren Abhebeerkennung bei Rufsignaleinspeisung in digitalen Fernsprechvermittlungseinrichtungen und Schaltungsanordnung zur Durchführung des Verfahrens**
Method for faultless off-hook detection in ring signal feeding in a digital telephone exchange and circuit for the implementation of the same
Procédé pour la détection sûre de décrochage pendant l'alimentation d'un signal de sonnerie dans une centrale téléphonique numérique et circuit pour sa mise en oeuvre

(30) Priorität: 04.03.1994 DE 4407281
(43) Veröffentlichungstag der Anmeldung: 04.10.1995
(73) Patentinhaber: Infineon Technologies AG, 81669 München (DE)
(72) Erfinder: Astegher, Berthold, Dipl. Ing., A-9020 Klagenfurt/Österreich (AT); Gazsi, Lajos, Dr. Ing., D-40239 Düsseldorf (DE)
(74) Vertreter: Charles, Glyndwr

(56) Entgegenhaltungen:
- EP-A- 0 089 687
- EP-A- 0 092 807
- EP-A- 0 143 435

## Beschreibung

Die Erfindung betrifft ein Verfahren zur störsicheren Abhebeerkennung bei Rufsignaleinspeisung in digitalen Fernsprechvermittlungseinrichtungen und eine Schaltungsanordnung zur Durchführung des Verfahrens.

Eine Fernsprechvermittlungseinrichtung stellt einer zu vermittelnden Fernsprecheinrichtung auf ihrer zugehörigen AB-Leitung sowohl eine Wechselspannung wie auch eine Gleichspannung beriet. Die Wechselspannung dient dazu, eine Rufeinrichtung, z. B. eine Klinge, in der Fernsprecheinrichtung zu aktivieren. Die Aktivierung dieser Toneinrichtung ist wechselspannungsgekoppelt, so dass die Gleichspannung erst fließen kann, wenn der Hörer der Fernsprecheinrichtung abgehoben wird. Das Verfahren bzw. die Schaltungsseinrichtung dient dazu, dies in einer Fernsprechvermittlungsseinrichtung zu erkennen. Durch verschieden lange Leitungsentfernungen können insbesondere bei kurzen Entfernungen starke Verzerrungen auf der AB-Leitung entstehen und somit eine Abhebeerkennung störanfällig machen.

In der EP 0 089 687 A2 ist ein Verfahren und eine analoge Schaltungsanordnung zur Abhebeerkennung bei einem Klingelstrom beschrieben. Dabei ist das Erkennen von Schwankungen des durch die Telefonleitungen fließenden Gleichstromes bei gleichzeitigem Vorhandensein eines hohen Wechselstromes vorgesehen. Dazu muss der Leitungsstrom mit einem konstanten Wert und einem geeigneten gepulsten Signal multipliziert werden, das so erhaltene Signal über mehrere Perioden integriert und mit vordefinierten Schwellwerten verglichen werden. Die Vorrichtung zielt insbesondere darauf ab, lediglich einen einzelnen Kondensator mit niedrigem Kapazitätswert in der Schaltungsanordnung einzusetzen.

Aufgabe der vorliegenden Erfindung ist es, ein Verfahren und eine Schaltungsanordnung zur störsicheren Abhebeerkennung bei Rufsignaleinspeisung in digitalen Fernsprechvermittlungseinrichtungen anzugeben.

Diese Aufgabe wird durch das Verfahren nach Anspruch 1 und eine Schaltungsanordnung zur Durchführung desselben nach Anspruch 2 gelöst. Weiterbildungen sind Kennzeichen der Unteransprüche.

Die Erfindung wird nachfolgend anhand von zwei Figuren näher erläutert.
Figur 1 zeigt ein Blockschaltbild einer erfindungsgemäßen Schaltungsanordnung zur Durchführung des Verfahrens.
Figur 2 zeigt einen zeitlichen Verlauf von Spannung und Strom auf einer Fernsprechleitung.

Grundlage des Verfahrens ist es den in der Fernsprechleitung fließenden Strom zu ermitteln und zu digitalisieren und den so ermittelten Wert z. B. durch einen Signalprozessor oder eine fest verdrahtete Digitalschaltung auszuwerten. Zuerst wird vom Stromwert ein Schwellwert abgezogen und daraufhin eine Multiplikation mit einer Konstanten durchgeführt. Als Konstante kann z. B. der Wert 4 verwendet werden. Vorzugsweise sollte die Konstante eine Potenz der Zahl 2 sein, um einen möglichst einfache Realisierung der Multiplikation durch Linksschieben eines den Multiplikanden enthaltenden Registers zu erreichen. Der so erhaltene Wert wird nachfolgend durch eine zweite Konstante dividiert. Diese Konstante kann z. B. den Wert 64 haben. Sie sollte ebenfalls vorzugsweise eine Zweierpotenz aufweisen, um eine Division durch Rechtsschieben zu erreichen. Der nachfolgend erhaltende Wert wird einer Integrationsstufe zugeführt, die über eine alle erhaltenen Werte aufintegriert. Am Ende einer Periode wird der erhaltene Wert mit einem Schwellwert, vorzugsweise "0", verglichen. Ist dieser Wert größer einer vorgebbaren Schwelle, so wurde ein Abheben eines Hörers erkannt.

Erfindungswesentlich ist, dass als erster Schritt des Verfahrens der Schwellwert vom digitalisierten Stromwert abgezogen wird, da diese Schwelle ansonsten durch die spätere Multiplikation und Division verloren geht. Durch das vorstehende Verfahren kann schon innerhalb von zwei Perioden ein dem Wechselstrom überlagerter Gleichstrom erkannt werden.

Durch die Multiplikation mit dem Faktor 4 wird das verzerrte Stromsignal auf den durch die Signalverarbeitung begrenzten Maximalwert begrenzt. Das so erhaltene annähernd rechteckförmige Signal wird durch 64 dividiert, um in der nachfolgenden Integrationsstufe einen Überlauf zu vermeiden. Zuerst werden dann die positiven Werte einer Halbwelle aufsummiert und nachfolgend die negativen Werte. Dadurch wird am Ausgang der Integrationsstufe ein dreieckförmiges Signal gebildet. Ist dem zu verarbeitenden Stromsignal ein Gleichstrom überlagert, so wird am Ende der Periode ein Wert größer bzw. kleiner Null am Ausgang der Integrationsstufe anliegen. Dieser wird von einem Komparator mit einer vorgebbaren Schwelle verglichen.

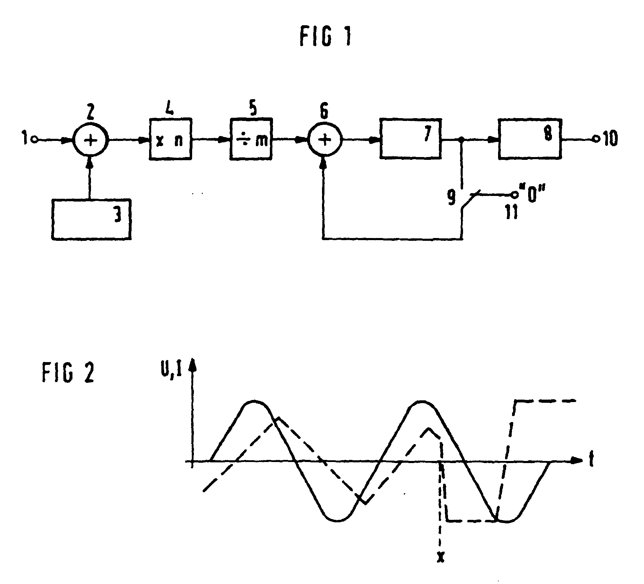

Figur 2 zeigt den zeitlichen Verlauf einer Spannung, durchgezogene Linie, und des zugehörigen Stroms, gestrichelte Linie, auf einer Fernsprechleitung bei Ruftoneinspeisung. Zum Zeitpunkt X sei angenommen, dass der Hörer abgehoben wurde, und sich daraufhin die dargestellte Stromkurve ergibt.

Figur 1 zeigt ein zugehöriges Ausführungsbeispiel einer erfindungsgemäßen Schaltungsanordnung zur Durchführung des zuvor beschriebenen Verfahrens.

Mit 1 ist eine Eingangsklemme bezeichnet, der das digitale Stromsignal zuführbar ist. Diese ist mit dem ersten Eingang eines Addierers 2 verbunden. Ein Schwellwert 3 wird vorzeichenrichtig, d.h. mit negativem Vorzeichen, dem zweiten Eingang des Addierers 2 zugeführt. Der Ausgang des Addierers ist mit dem Eingang einer Multiplizierstufe 4 zugeführt. Diese führt einen Multiplikation mit dem Faktor n, der z. B. 4 betragen kann, durch. Der Ausgang des Multiplizierers 4 ist mit dem Eingang eines Dividierers 5 verbunden. Der Dividierer 5 dividiert das erhaltene Signal durch den Divisor m, der z. B. 64 betragen kann. Der Ausgang des Dividierers 5 ist mit dem ersten Eingang eines Addierers 6 verbunden. Der Ausgang des Addierers 6 ist mit dem Eingang eines Speichers 7 verschaltet. Der Ausgang des Speichers 7 ist zum einen mit dem Eingang eines Komparators 8 und zum anderen mit dem ersten Umschaltkontakt eines Umschalters 9 verbunden. Der zweite Umschaltkontakt des Umschalters 9 ist mit einem Anschluss 11 verschaltet, dem ein digitales Nullsignal zuführbar ist. Der Mittelkontakt des Umschalters 9 ist mit dem zweiten Eingang des Addierers 6 verbunden. Der Ausgang des Komparators 8 ist mit einer Ausgangsklemme 10 verschaltet, an der das Ausgangssignal abgreifbar ist.

Die Elemente 6, 7 und 9 bilden die Integrationsstufe. Am Anfang einer Periode wird der Umschalter 9 derart geschaltet, dass am zweiten Eingang des Addierers 6 ein digitaler Nullwert anliegt. Bei der nachfolgenden Addition wird der Umschalter so geschaltet, dass das Ausgangssignal des Speichers 7 dem zweiten Eingang des Addierers 6 zugeführt wird. Auf diese Weise kann für jede Periode getrennt ein Integrationswert gebildet werden.

## Patentansprüche

1. Verfahren zur störsicheren Abhebeerkennung bei Rufsignaleinspeisung in digitalen Fernsprechvermittlungseinrichtungen mit den folgenden Schritten:
- Digitalisieren eines in der Fernsprechleitung fließenden Stroms,
- Abziehen eines Schwellwerts vom ermittelten Stromwert,
- Durchführen einer Multiplikation mit einer ersten Konstanten,
- Durchführen einer Division mit einer zweiten Konstanten, die größer als die erste Konstante ist,
- Integrieren der so ermittelten Werte über eine Periode,
- Vergleichen des integrierten Werts nach einer Periode mit einem Schwellwert,
- Erkennen eines Abhebens, falls der integrierte Wert größer als der Schwellwert ist.

2. Schaltungsanordnung zur störsicheren Abhebeerkennung bei Rufsignaleinspeisung in digitalen Fernsprechvermittlungseinrichtungen mit:
- einer ersten Additionsstufe (2), der ein digitalisierter Stromwert und ein Schwellwert (3) zugeführt ist,
- einer Multiplikationsstufe (4), deren Eingang mit dem Ausgang der Additionsstufe (2) verbunden ist,
- einer Divisionsstufe (5), deren Eingang mit dem Ausgang der Multiplikationsstufe (4) verbunden ist,
- einer Integrationsstufe (6, 7, 9), deren Eingang mit dem Ausgang der Divisionsstufe (5) verbunden ist,
- einer Komparatorstufe (8), deren Eingang mit dem Ausgang der Integrationsstufe (6, 7, 9) verbunden ist und an deren Ausgang (10) ein Ausgangssignal zum Erkennen eines Abhebens abgreifbar ist.

3. Schaltungsanordnung nach Anspruch 2,
**dadurch gekennzeichnet,**
**dass** die Integrationsstufe eine Additionsstufe (6) aufweist, deren erster Eingang mit dem Ausgang der Divisionsstufe (5) verbunden ist und deren Ausgang mit dem Eingang eines Speichers (7) verschaltet ist, wobei der Ausgang des Speichers (7) mit dem zweiten Eingang der Additionsstufe (5) verbunden ist und den Ausgang der Integrationsstufe bildet.

4. Schaltungsanordnung nach Anspruch 3,
**dadurch gekennzeichnet,**
**dass** zwischen dem Ausgang des Speichers (7) und dem zweiten Eingang der Additionsstufe (6) Umschaltmittel (9) geschaltet sind, die am Beginn einer Periode den zweiten Eingang der Additionsstufe (6) auf einen digitalen Nullwert schalten und während des Rests der Periode den Ausgang des Speichers (7) mit dem Eingang der Additionsstufe (6) verbinden.

## Claims

1. Method for reliable off-hook detection when feeding ringing signals into digital telephone switching centres, having the following steps:
- a current flowing in the telephone line is digitized,
- a threshold value is deducted from the ascertained current value,
- multiplication by a first constant is performed,
- division by a second constant, which is larger than the first constant, is performed,
- the values ascertained in this manner are integrated over one period,
- the integrated value after one period is compared with a threshold value,
- an off-hook state is detected if the integrated value is larger than the threshold value.

2. Circuit arrangement for reliable off-hook detection when feeding ringing signals into digital telephone switching centres, having:
- a first addition stage (2), which has a digitized current value and a threshold value (3) supplied to it,
- a multiplication stage (4), whose input is connected to the output of the addition stage (2),
- a division stage (5), whose input is connected to the output of the multiplication stage (4),
- an integration stage (6, 7, 9), whose input is connected to the output of the division stage (5),
- a comparator stage (8), whose input is connected to the output of the integration stage (6, 7, 9) and at whose output (10) an output signal for detecting an off-hook state can be tapped off.

3. Circuit arrangement according to Claim 2,
**characterized**
**in that** the integration stage has an addition stage (6), whose first input is connected to the output of the division stage (5) and whose output is connected up to the input of a memory (7), the output of the memory (7) being connected to the second input of the addition stage (5) and forming the output of the integration stage.

4. Circuit arrangement according to Claim 3,
**characterized**
**in that** changeover means (9) are connected between the output of the memory (7) and the second input of the addition stage (6), said changeover means (9) switching the second input of the addition stage (6) to a digital zero value at the start of a period and connecting the output of the memory (7) to the input of the addition stage (6) for the rest of the period.

## Revendications

1. Procédé pour la détection, insensible aux parasites, du décrochage lors de l'application d'un signal d'appel dans des dispositifs numériques de commutation téléphonique, comportant les étapes suivantes :
- numériser un courant passant dans la ligne téléphonique,
- soustraire une valeur de seuil de la valeur de courant déterminée,
- effectuer une multiplication par une première constante,
- effectuer une division par une deuxième constante qui est plus grande que la première constante,
- intégrer les valeurs ainsi déterminées sur une période,
- comparer la valeur intégrée après une période à une valeur de seuil,
- détecter un décrochage si la valeur intégrée est supérieure à la valeur de seuil.

2. Circuit pour la détection, insensible aux parasites, du décrochage lors de l'application d'un signal d'appel dans des dispositifs numériques de commutation téléphonique, comportant :
- un premier étage d'addition (2) auquel une valeur de courant numérisée et une valeur de seuil (3) sont envoyées,
- un étage de multiplication (4) dont l'entrée est reliée à la sortie de l'étage d'addition (2),
- un étage de division (5) dont l'entrée est reliée à la sortie de l'étage de multiplication (4),
- un étage d'intégration (6, 7, 9) dont l'entrée est reliée à la sortie de l'étage de division (5),
- un étage de comparaison (8) dont l'entrée est reliée à la sortie de l'étage d'intégration (6, 7, 9) et à la sortie (10) duquel un signal de sortie pour la détection d'un décrochage peut être prélevé.

3. Circuit selon la revendication 2, **caractérisé en ce que** l'étage d'intégration comporte un étage d'addition (6) dont la première entrée est reliée à la sortie de l'étage de division (5) et dont la sortie est reliée à l'entrée d'une mémoire (7), la sortie de la mémoire (7) étant reliée à la deuxième entrée de l'étage d'addition (5) et formant la sortie de l'étage d'intégration.

4. Circuit selon la revendication 3, **caractérisé en ce que**, entre la sortie de la mémoire (7) et la deuxième entrée de l'étage d'addition (6), sont branchés des moyens de commutation (9) qui, au début d'une période, branchent la deuxième entrée de l'étage d'addition (6) sur une valeur numérique zéro et qui, pendant le reste de la période, relient la sortie de la mémoire (7) à l'entrée de l'étage d'addition (6).
